# EUROPEAN PATENT SPECIFICATION

(11) **EP 1 899 518 B1**
(45) Date of publication and mention of the grant of the patent: **28.10.2009**
(21) Application number: 06754338.9
(22) Date of filing: 13.06.2006
(51) Int. Cl.: D04B 1/24

(54) **METHOD FOR KNITTING MANUFACTURED ARTICLES WITH HIGH-FINENESS CIRCULAR KNITTING MACHINES**
VERFAHREN ZUR HERSTELLUNG VON ERZEUGNISSEN MIT HOCHFEINEN RUNDSTRICKMASCHINEN
PROCEDE DE TRICOTAGE D'ARTICLES FABRIQUES AVEC UNE MACHINE A TRICOTER CIRCULAIRE A FINESSE ELEVEE

(30) Priority: 23.06.2005 IT MI20051189
(43) Date of publication of application: 19.03.2008
(73) Proprietor: SANTONI S.p.A., 25135 Brescia (IT)
(72) Inventor: LONATI, Ettore, I-25080 Botticino (IT); LONATI, Tiberio, I-25121 Brescia (IT); LONATI, Fausto, I-25128 Brescia (IT)
(74) Representative: Alagem Modiano, Lara S.
(86) International application number: PCT/EP2006/005672
(87) International publication number: WO 2006/136312

(56) References cited:
- WO-A-02/070799
- US-A- 830 374
- US-A- 2 622 423
- US-A- 3 137 150

## Description

### Technical Field

The present invention relates to a method for knitting manufactured articles with circular knitting machines, particularly with high-fineness, high-gauge circular knitting machines.

Knitting machines for hosiery or the like capable of transferring a loop of knitting from the needle that formed it to a contiguous needle are known. A machine of this kind is disclosed, for example, in WO-02/070799.

### Background Art

Up to now, this technique for transferring loops of knitting has been used mainly to obtain openwork in manufactures. Examples of application of this technique for openwork are disclosed in WO2005/080653 by the same Applicant.

Methods for knitting shaped manufactures with circular knitting machines are also known which are based on increasing the number of active needles in certain regions of the manufacture. Techniques of this kind suffer the drawback of allowing only to increase the active needles and therefore require starting the knitting of the manufacture from its side that must be knitted with a minimum number of needles. This fact limits the knitting processes that are possible and the shapes that can be obtained with this technique.

US 830 374 also describes a method for knitting manufactured articles, with circular knitting machines.

### Disclosure of the Invention

The aim of the present invention is to provide a method for knitting manufactured articles or manufactures with circular knitting machines, particularly with high-fineness circular knitting machines, which by using the technique of transferring the loop of knitting from one needle to a contiguous needle allows to obtain particular shaping effects of the manufacture and/or aesthetic effects.

Within this aim, an object of the invention is to provide a method which can be used also to reduce the consumption of thread in certain regions of the manufacture in order to avoid wasting raw material.

Another object of the invention is to provide a method which can be used to obtain shaping or aesthetic effects on manufactures produced with circular machines of high fineness, ranging preferably substantially from 16 to 50 needles per inch (i.e. per 25,4 mm.).

This aim and these and other objects, which will become better apparent hereinafter, are achieved by a method for knitting manufactured articles with circular knitting machines, particularly with high-fineness circular knitting machines according to the subject matter of claim 1.

### Brief description of the drawings

Further characteristics and advantages of the invention will become better apparent from the description of some preferred but not exclusive embodiments of the method according to the invention, illustrated by way of non-limiting example in the accompanying drawings, wherein:
Figure 1 is a view of the reverse side of a portion of manufacture obtained with the method according to the invention in a first embodiment;
Figure 2 is a view of a constructive variation of the knitting shown in Figure 1;
Figure 3 is a view of the reverse side of a portion of manufacture obtained with the method according to the invention in a second embodiment;
Figure 4 is a schematic view of an undershirt which can be obtained with the method according to the invention;
Figure 5 is a view of a tubular intermediate, semifinished, manufacture for producing a body suit obtained with the method according to the invention;
Figures 6a and 6b are respectively views of the front side and rear side of a tubular intermediate manufacture for knitting a pair of underpants;
Figures 7a and 7b are respectively views of the front side and rear side of a tubular intermediate manufacture for knitting a pair of underpants.
Figure 8 is a fragmentary view of an adjustable cam arrangement, known in the art, wherein a stitch is released from one needle and transferred to an adjacent needle;
Figure 9 is a schematic top plan view of adjacent hooks and sinkers showing the creation of the stitch pattern according to the cam location shown in Figure 8.

### Ways of carrying out the Invention

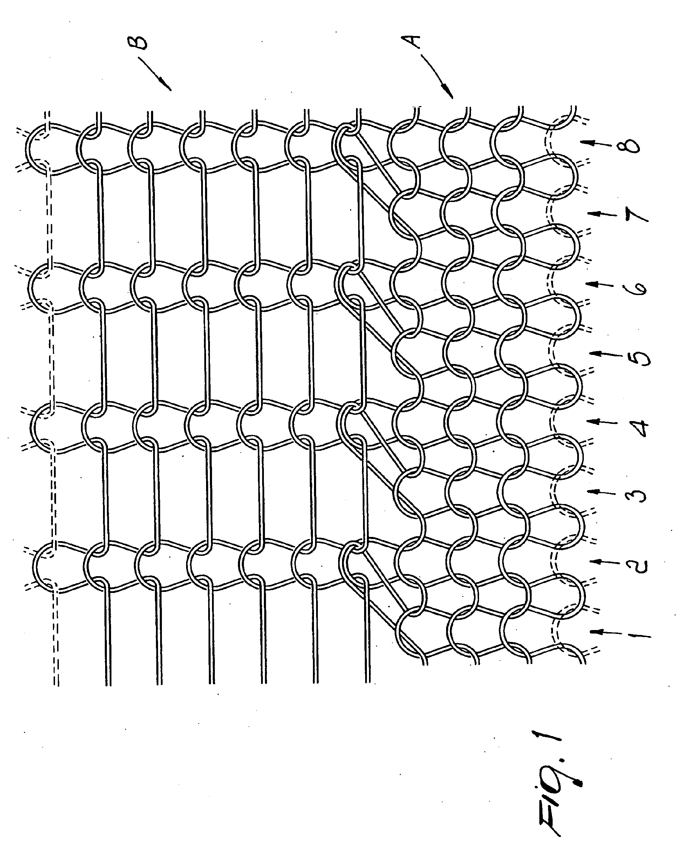

With reference to Figures 1 to 3, the method according to the invention consists substantially in that at least once during the formation of the manufactured article or manufacture, the number of active cylinder needles is reduced by transferring the last loop of knitting formed by certain cylinder needles to contiguous cylinder needles. After the transfer of the loop of knitting, these needles are excluded from knitting, while the other cylinder needles continue to form knitting at the subsequent feeds or drops of the machine.

Figure 1 illustrate a portion of a manufacture obtained with the method according to the invention. For the sake of simplicity, the illustration of the portion of the manufacture has been limited to the knitting of eight needles, whose rows of knitting have been designated by the reference numerals 1 to 8. The formation of the portion of knitting proceeds from the bottom upwardly in Figure 1.

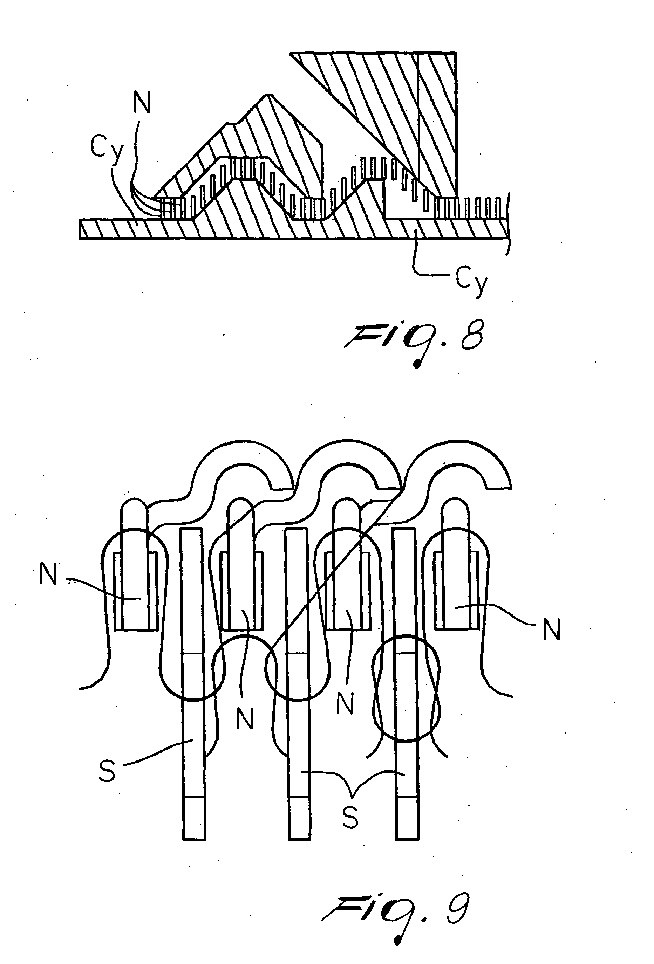

According to the invention, after providing a first region of knitting A, using substantially all the needles of the machine, except for any variations of the active needles due to pattern requirements, a region of knitting B is produced by using half of the needles used to form the region of knitting A. This reduction of the active needles is obtained, according to the invention, by causing in a per se known manner, for example as provided in WO-02/70799 (see Figures 8 and 9), the transfer of the last loop of knitting formed by the needles that form the rows 1, 3, 5, 7 to the needles that form the rows 2, 4, 6, 8 and then continue knitting by forming the region of knitting B.

The needles N excluded from knitting are kept retracted within the needle cylinder Cy, below the casting-off plane formed by the sinkers S, so as to not interfere with the work of the other needles N or of the other elements of the machine.

Owing to the fact that the region of knitting B is knitted with a smaller number of needles and therefore is composed of a smaller number of loops of knitting, greater transparency and/or reduced stretchiness of the knitting is obtained at such region of knitting B. Moreover, again for this reason, at said region the manufacture contracts. In this manner it is possible to achieve shaping of the manufacture.

The shaping effects and/or the transparency effects on the manufacture that can be obtained with the method according to the invention are several and can be alternated with each other, since at any time after the formation of the manufacture it is possible to resume knitting with at least some of the needles previously excluded from knitting.

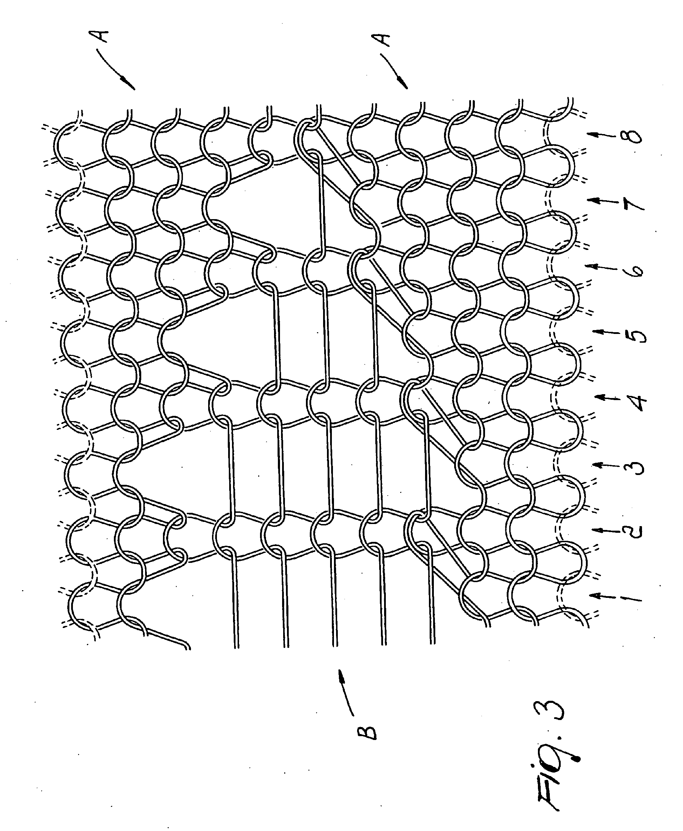

Figure 3 illustrates a portion of a manufacture produced with the method according to the invention by excluding from knitting, in a certain step of the knitting process, certain needles, in a manner similar to what has been described with reference to Figure 1, and by resuming, in a subsequent step, knitting with the needles previously excluded from knitting. In Figure 3 also, for the sake of simplicity, the illustration of the portion of manufacture has been limited to the knitting of eight needles, whose rows of knitting have been designated by the reference numerals 1 to 8. The formation of the portion of knitting proceeds from the bottom upwardly in Figure 3.

More particularly, after providing a first region of knitting A by using substantially all the needles of the machine except for any variations of the active needles due to pattern requirements, a region of knitting B is produced by using half of the needles used to form the region of knitting A. This reduction of the active needles is obtained, according to the invention, by causing, in a per se known manner, the transfer of the last loop of knitting formed by the needles that form the rows 1, 3, 5, 7 to the needles that form the rows 2, 4, 6, 8 and then continue knitting by forming the region of knitting B.

The needles of the rows 1, 3, 5, 7 that had been excluded from knitting are then made to knit again, forming, together with the other needles, a region of knitting A which is similar to the region of knitting A that had been formed before the needles of the rows 1, 3, 5, 7 were excluded from knitting.

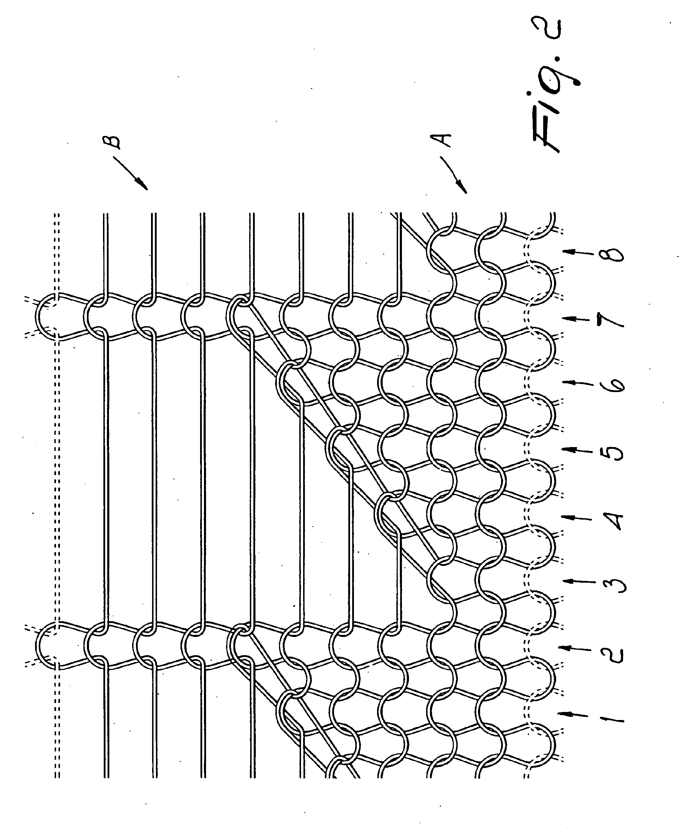

It should be noted that for the sake of simplicity in description it has been assumed that during the formation of the region B one needle out of every two contiguous needles is excluded from knitting, but the number of needles excluded from knitting may change according to the requirements. It is in fact possible, by means of the repeated transfer of a loop of knitting and optionally of loops of knitting received previously from a contiguous needle, to exclude from knitting two needles out of every three, or three needles out of every four, and so forth. Figure 2 illustrates a region B produced by excluding from knitting, by means of repeated transfers of loops of knitting from one needle to a contiguous needle, four needles out of every five contiguous ones. In this figure, for which the same numbering as in Figures 1 and 3 has been kept, after a certain number of rows of knitting, required to transfer the loops of knitting from the needles to be excluded from knitting to a contiguous needle, the needles that form the rows of knitting 1, 3, 4, 5, 6, 8 are gradually excluded from knitting, while the needles that form the rows of knitting 2 and 7 continue to knit.

Likewise, the needles previously excluded from knitting may all be returned to work, or only some of the needles previously excluded from knitting may be returned to work, according to the requirements.

Moreover, although the needles excluded from knitting are preferably uniformly spaced from each other, they may also be arranged at mutually different distances. For example, in the formation of a same row of knitting there may be regions of row knitted by one needle out of every two contiguous ones and regions of row knitted by one needle out of every three contiguous ones and/or regions of row knitted by one needle out of every four contiguous ones, et cetera.

In this manner it is possible to obtain regions of the manufacture with diversified transparencies and shaping effects which can vary according to the requirements.

Moreover, it should be noted that since the regions B are knitted with a smaller number of needles, they require a smaller amount of thread to be manufactured. It is therefore particularly advantageous to provide as regions B the regions of the manufacture that are meant to be cut and discarded during the finishing step of the manufacture, as will become better apparent hereinafter.

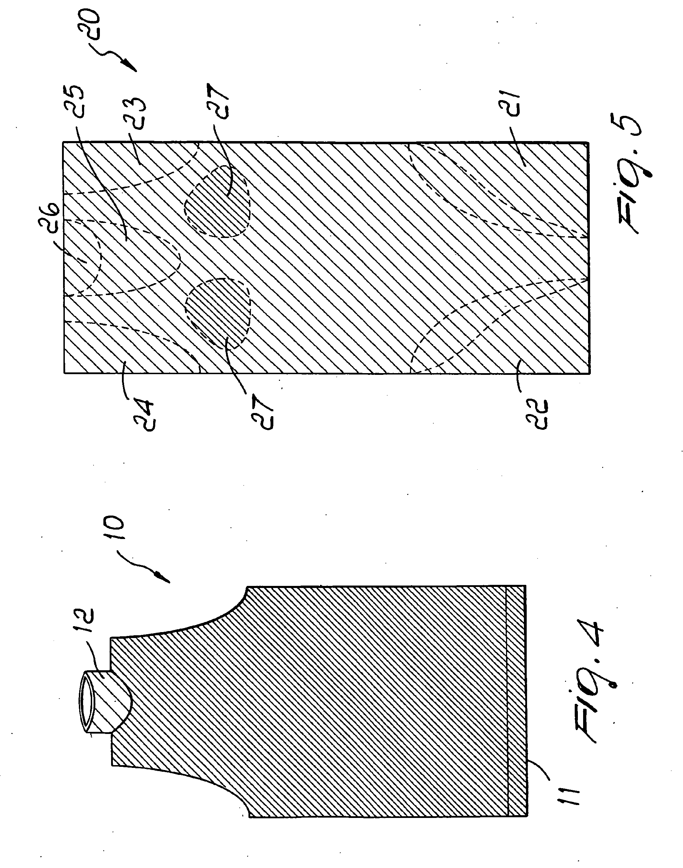

Merely by way of example, Figure 4 illustrates an undershirt 10, which can be manufactured with the method according to the invention.

The undershirt 10. is preferably manufactured starting from the lower edge 11 and by providing, in a per se known manner, almost all the undershirt up to the region of the neck 12, for example by making all the needles of the machine knit, with allowance for any need to vary the active needles in order to produce patterns and for any cutting of the threads in order to provide armholes. In practice, the entire undershirt 10, except for the region of the neck 12, can be provided like the region A described above with reference to Figures 1, 2, 3.

The neck region 12 is manufactured by reducing the number of active needles. The number of active needles is reduced, according to the invention, by transferring the last loop of knitting from the needles that must be subsequently excluded from knitting to the contiguous needles. In practice, the neck region 12 can be provided like the region B described above with reference to Figures 1, 2, 3.

In this manner, the neck region 12 is highly shaped and narrow with respect to the remaining part of the manufacture, obtaining an excellent fit for such region.

Figure 5 illustrates a tubular intermediate, semifinished, manufacture 20 for providing a body suit, in which the regions 21, 22, 23, 24, 25, 26 meant to be removed during the finishing step of the knitted manufacture are marked.

In this case, nearly all the manufacture can be provided like the region B described above with reference to Figures 1, 2, 3 , i.e., by using a reduced number of needles. In this manner it is possible to obtain a transparency effect on the entire item, the use of thread is reduced particularly for producing the regions that are meant to be subsequently removed, and it is possible to obtain shaping effects in the various regions of the manufacture to be produced.

The transparency and shaping effect of the manufacture can be obtained, as explained above, by varying, even on a same row, the number of needles used to produce the different regions of the manufacture.

Specific regions of the manufacture requiring greater consistency and/or reduced transparency and/or an increase in the circumferential dimensions of the manufacture, such as for example the regions of the cups of the bra 27, can be provided by increasing the active needles used to produce these regions with respect to the needles used to produce the remaining part of the manufacture. Substantially, the regions 27 can be provided like the regions A described above with reference to Figures 1, 2, 3.

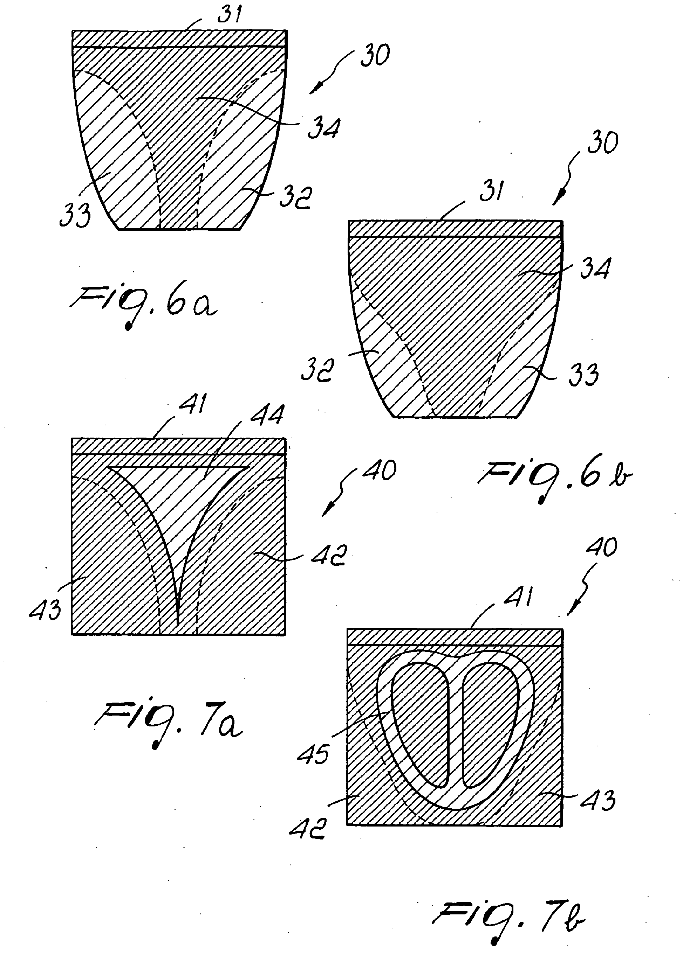

Figures 6a, 6b illustrate the front side and the rear side of a tubular intermediate manufacture 30 for producing a pair of underpants. The intermediate manufacture is preferably obtained by starting production from the belt region 31 and by producing the regions 32, 33, which are meant to be removed during the finishing step of the manufacture, with a reduced number of needles, for example like the regions B described above with reference to Figures 1, 2, 3, while the remaining part 34 of the manufacture is produced by using substantially all the remaining needles of the machine, for example like the regions A described above with reference to Figures 1, 2, 3, with allowance for variations of the active needles for obtaining pattern effects and/or open-knit/open-work and/or ladderproof knitting structures.

This reduces the amount of thread for providing the regions 32, 33 meant to be removed.

Figures 7a, 7b illustrate the front side and the rear side of a tubular intermediate manufacture 40 for producing a pair of underpants, with regions 42, 43 which are meant to be removed during the finishing step of the manufacture.

Preferably, the tubular intermediate, semifinished, manufacture 40 is obtained by starting production from the belt region 41. The manufacture is produced by using, for most of its production, all the remaining needles of the machine, for example such as the regions A describe above with reference to Figures 1, 2, 3, with allowance for variations of the active needles in order to obtain pattern effects and/or open-knit and/or ladderproof knitting structures. Optionally, the regions 42, 43 meant to be removed during the finishing step of the manufacture may be provided with a reduced number of needles, for example like the regions B described above with reference to Figures 1, 2, 3.

At preset regions 44, 45, such as for example the front central region and/or the peripheral region of the buttocks, for which transparency effects and/or effects of reduced stretchiness are to be obtained in order to achieve containment and/or shaping and/or support effects, knitting is performed by using a reduced number of needles, for example as in the production of the regions B described above with reference to Figures 1, 2, 3.

Substantially, in the examples described above, the transition from knitting with a certain number of needles (region A) to knitting with a reduced number of needles (region B) is obtained, according to the invention, by transferring the last loop of knitting formed by the needles that must then be excluded from knitting to the contiguous needles that instead must continue knitting. Any transition from knitting with a reduced number of needles (region B) to knitting with a larger number of needles (region A) is achieved simply by returning to work at least part of the needles previously excluded from knitting.

It should be noted that the method according to the invention is meant to be used preferably in circular knitting machines having a fineness or gauge ranging from 16 to 50 needles per inch (i.e. per 25,4 mm.), obtaining high-fineness manufactures with transparency and/or shaping effects never obtained before on these finenesses.

In practice it has been found that the method according to the invention fully achieves the intended aim, since by using the technique of transferring the loop of knitting from one needle to a contiguous needle in order to reduce the active needles it allows to obtain particular shaping effects of manufactures and/or aesthetic transparency effects and/or savings in thread, even on high-fineness manufactures.

The method thus conceived is susceptible of numerous modifications and variations, all of which are within the scope of the appended claims.

In practice, the materials used, as well as the dimensions, may be any according to requirements and to the state of the art.

## Claims

1. A method for knitting manufactured articles with circular knitting machines, particularly with high-fineness circular knitting machines, **characterized in that** at least once during the formation of the manufactured article, the number of active cylinder needles is reduced by transferring the last loop of knitting formed by certain cylinder needles to contiguous cylinder needles and thus excluding from knitting said certain cylinder needles during the formation of at least one subsequent row of knitting by the cylinder needles that are kept active.

2. The method according to claim 1, **characterized in that** during at least one successive step of knitting, at least part of the needles previously excluded from knitting are returned to work.

3. The method according to claim 1, **characterized in that** the needles excluded from knitting are uniformly spaced from each other.

4. The method according to one or more of the preceding claims, **characterized in that** it is performed on circular knitting machines having a fineness substantially ranging from 16 to 50 needles per 25,4 mm.

## Patentansprüche

1. Verfahren zum Stricken von Erzeugnissen mit Rundstrickmaschinen, insbesondere mit Rundstrickmaschinen mit hoher Einheit, **dadurch gekennzeichnet, dass** mindestens einmal während der Ausbildung des Erzeugnisses die Anzahl der aktiven Zylindernadeln reduziert wird, indem die letzte Strickmasche, die von bestimmten Zylindernadeln ausgebildet wird, auf benachbarte Zylindernadeln übertragen wird und somit diese genannten bestimmten Zylindernadeln während der Ausbildung mindestens einer nachfolgenden Strickreihe durch die aktiv gehaltenen Zylindernadeln vom Stricken ausgeschlossen werden.

2. Verfahren nach Anspruch 1, **dadurch gekennzeichnet, dass** während mindestens eines nachfolgenden Strickschrittes mindestens ein Teil der zuvor vom Stricken ausgeschlossenen Nadeln wieder aktiviert wird.

3. Verfahren nach Anspruch 1, **dadurch gekennzeichnet, dass** die vom Stricken ausgeschlossenen Nadeln gleichmäßig zueinander beabstandet sind.

4. Verfahren nach einem oder mehr der vorhergehenden Ansprüche, **dadurch gekennzeichnet, dass** es an Rundstrickmaschinen durchgeführt wird, die eine Feinheit haben, die im Wesentlichen im Bereich zwischen 16 und 50 Nadeln pro 25,4 mm liegt.

## Revendications

1. Procédé pour tricoter des articles manufacturés avec des machines à tricoter circulaires, en particulier avec des machines à tricoter circulaires de grande finesse, **caractérisé en ce qu'**au moins une fois pendant la formation de l'article manufacturé, le nombre d'aiguilles de cylindre actives est réduit en transférant la dernière boucle de tricot formée par certaines aiguilles de cylindre vers des aiguilles de cylindre contiguës et en excluant ainsi du tricotage lesdites certaines aiguilles de cylindre pendant la formation d'au moins un rang subséquent de tricot par les aiguilles de cylindre qui sont maintenues actives.

2. Procédé selon la revendication 1, **caractérisé en ce que** pendant au moins une étape successive de tricotage, au moins une partie des aiguilles précédemment exclues du tricotage sont remises au travail.

3. Procédé selon la revendication 1, **caractérisé en ce que** les aiguilles exclues du tricotage sont uniformément espacées les unes des autres.

4. Procédé selon une ou plusieurs des revendications précédentes, **caractérisé en ce qu'**il est mis en oeuvre sur des machines à tricoter circulaires ayant une finesse variant sensiblement de 16 à 50 aiguilles par 25,4 mm.
